# FASCICULE DE BREVET EUROPEEN

(11) **EP 1 824 663 B1**
(45) Date de publication et mention de la délivrance du brevet: **25.07.2012**
(21) Numéro de dépôt: 05850534.8
(22) Date de dépôt: 19.12.2005
(51) Int. Cl.: B29C 65/02, B29D 22/00, B29D 22/02, E02B 15/04, E02B 3/12, F16K 7/10

(54) **PROCEDE DE FABRICATION EN CONTINU D'UN COMPLEXE SOUPLE ET COMPLEXE SOUPLE**
VERFAHREN ZUR UNUNTERBROCHENEN HERSTELLUNG EINES FLEXIBLEN KOMPLEXES UND BESAGTER FLEXIBLER KOMPLEX
METHOD FOR CONTINUOUSLY PRODUCING A FLEXIBLE COMPLEX AND SAID FLEXIBLE COMPLEX

(30) Priorité: 17.12.2004 FR 0413448
(43) Date de publication de la demande: 29.08.2007
(73) Titulaire: PENNEL et FLIPO, 59100 Roubaix (FR)
(72) Inventeur: LIMPENS, Marc, F-59150 WATTRELOS (FR)
(74) Mandataire: Novagraaf Technologies
(86) Numéro de dépôt international: PCT/FR2005/003181
(87) Numéro de publication internationale: WO 2006/067321

(56) Documents cités:
- WO-A-87/02438
- WO-A-98/00285
- WO-A-02/079054
- DE-A1- 1 952 785
- DE-A1- 3 610 656
- FR-A- 960 043
- FR-A- 2 856 008
- US-A- 4 248 547
- US-A- 5 123 987
- US-A1- 2004 026 821

## Description

La présente invention concerne procédé de fabrication en continu d'un complexe souple en tissu enduit comportant au moins une, voire des, poche(s) étanche(s), poche(s) pouvant contenir un gaz, un liquide ou éventuellement un solide. L'invention concerne également un complexe souple en tissu enduit comportant au moins une poche étanche.

Pour la lutte contre la pollution ou encore pour des coffrages perdus en atmosphère marine, on utilise fréquemment des complexes souples constitués d'une succession de poches.

La réalisation de ces poches nécessite le plus souvent une confection, c'est-à-dire que l'on confectionne une poche et ensuite on passe à la confection de la poche suivante.

Les méthodes actuelles de fabrication sont des méthodes discontinues. L'une des méthodes consiste à assembler une poche par collage par exemple. Les poches ainsi confectionnées étant ensuite assemblées successivement.

Une autre méthode de confection consiste à assembler deux nappes de tissu enduits. La solidarisation des deux nappes se fait par chauffage avec ou sans pression et avec ou sans apport de matière ou encore par simple collage. Cette solidarisation est réalisée pas à pas. Généralement cette dernière méthode est réservée à des poches de grandes dimensions.

Dans le cas de nappe en plastique, la solidarisation peut se faire par soudure Haute Fréquence ou encore par soudure thermique ou éventuellement par collage. Dans le cas des nappes en caoutchouc, il est nécessaire de les vulcaniser au préalable ; la solidarisation des deux nappes vulcanisées peut se faire soit par collage, soit par apport d'une bande de caoutchouc non vulcanisée que l'on vulcanise sous pression.

Ces technologies discontinues ont l'inconvénient d'être longues et donc onéreuses. En particulier pour les tissus enduits de caoutchouc, elles nécessitent une opération supplémentaire de vulcanisation continue avant ou après la confection.

Le document US 4 248 547 décrit un procédé discontinue de production d'un complexe souple pour enfermer/ isoler des impuretés flottant sur l'eau.

Le document plus pertinent DE 1952785 décrit un procédé de fabrication d'un dispositif avec des cavités creuses. Le procédé décrit est un procédé continu comprenant le dépôt d'un agent de séparation sur au moins une partie de surface, l'assemblage de ladite surface avec une autre surface par des procédés communs de l'état de la technique. Le document W002079054 décrit un procédé discontinue de production d'un tube multicellules comprenant une étape de préparation du matériau sous forme cylindrique par association des extrémités, une étape de pliage par repliement interne du matériau cylindrique, une étape de séparation, une étape d'attachement d'une valve à une extrémité du dispositif obtenu

Il subsiste donc un besoin pour un procédé de fabrication de complexe souple comprenant au moins une poche étanche qui soit moins onéreux, tout en permettant l'obtention d'un produit résistant.

Les inventeurs ont découvert qu'un procédé de fabrication spécifique permettait de résoudre en tout ou partie les problèmes présentés ci-dessus.

La présente invention a pour but d'éviter en tout ou partie ces inconvénients en proposant un procédé de fabrication en continu de poches étanches comportant, en particulier pour les tissus enduits de caoutchouc, une vulcanisation intégrée dans le procédé comme revendiqué à la revendication 1.

Selon un de ses aspects, l'invention a pour objet un procédé de fabrication en continu d'un complexe souple comprenant, ou constitué par, au moins une poche étanche comprenant les étapes consistant à :
- déposer sur au moins une nappe de tissu enduit (10) un agent anticollant (14) dans les zones destinées à former la ou les poches,
- assembler en continu la nappe de tissu enduit (10) sur laquelle l'agent anticollant (14) a été déposée avec la nappe de tissu enduit (20), par chauffage et/ou pression.

Par rapport aux méthodes d'assemblage discontinues, l'utilisation d'une machine d'assemblage en continu, notamment travaillant sous pression et/ou à haute température, peut apporter plusieurs avantages :
* Au niveau des assemblages : ce sont des assemblages autogènes donc sans apport de matière supplémentaire comme de la colle qui est de composition différente des enductions et qui peut constituer un point de faiblesse.
* Au niveau de l'esthétique : ce procédé permet l'emploi d'un intercalaire textile qui peut conférer un aspect uniforme. En particulier lorsqu'un intercalaire en support textile, ou toute autre nappe, est utilisé au moment de l'assemblage, cela peut conférer un aspect uniforme et décoratif. Les variantes importantes d'intercalaires peuvent permettrent de personnaliser le produit. Enfin, cette opération de personnalisation ou de décoration peut être effectuée en même temps que l'opération d'assemblage, elle est donc simple et peu onéreuse à effectuer.
* Au niveau de l'encombrement : avant le gonflage des poches, le complexe réalisé peut être sensiblement, voire parfaitement, plan, sans surépaisseur importante, ce qui limite l'encombrement après pliage.

Par l'expression « tissu », on entend au sens de la présente invention une structure constituée de fils de chaîne et de fils de trame, généralement perpendiculaires.

Par l'expression « en continu », on entend au sens de la présente invention qu'il n'y a pas de rupture de rythme, notamment pas de période d'arrêt. En particulier pas d'arrêt entre la production d'une poche et la suivante.

Plus précisément on entend par l'expression « procédé en continu », un procédé dans lequel le produit sort de manière régulière, sans arrêt entre les différentes poches et/ou les différents articles produit.

Par « simultanément », on entend que les opération sont effectuées dans une même chaîne, et que notamment lorsqu'une opération de dépôt de l'agent anticollant à lieue à un certain niveau du tissu, une opération d'assemblage à lieue un peu plus loin sur ce même tissu.

Plus particulièrement le procédé, et/ou l'étape d'assemblage, est effectué à une vitesse sensiblement constante, c'est-à-dire variant de moins de 20 %, notamment de moins de 10 %, voire est effectué à une vitesse constante.

L'étape consistant à déposer l'agent anticollant sur le tissu enduit peut quant à elle être effectuée pas à pas ou en continue.

La vitesse du dépôt de l'agent anticollant peut être supérieure ou égale à 8 m/h, notamment supérieure ou égale à 12 m/h, en particulier supérieure ou égale à 15 m/h, voire supérieure ou égale à 20 m/h.

Il est possible de prévoir une étape d'accumulation entre l'étape de dépôt d'anticollant et celle d'assemblage des tissus, en particulier lorsque la vitesse de dépôt de l'agent anticollant est supérieure à celle de l'assemblage.

L'étape d'assemblage pour sa part peut être effectuée à une vitesse de défilement du tissu enduit supérieure ou égale à 8 m/h, notamment supérieure ou égale à 12 m/h, en particulier supérieure ou égale à 15 m/h, voire supérieure ou égale à 20 m/h.

Lors de l'étape d'assemblage, il est possible d'insérer un intercalaire, notamment un tissu. Le relief de ce tissu vient grainer ou graver l'enduit (3). Le tissu peut être enlevé après l'opération d'assemblage. Ceci peut permettre de personnaliser ou de décorer l'article produit, sans effectuer d'étape supplémentaire dans le procédé.

Le procédé peut comprendre en outre une étape préalable consistant à réaliser au moins deux nappes de tissu enduit (10) et (20).

L'invention a également pour objet un procédé de fabrication en continu d'une succession de poches étanches formées à partir de deux nappes de tissus enduits, le tissu étant constitué de fils de chaîne et de fils de trame caractérisés en ce que les étapes du procédé de fabrication sont les suivantes :
- étape 1 :
   - sur la première nappe de tissu enduit, on dépose en continu un anticollant aux endroits où vont se trouver les poches. La pose en continu de cet anticollant peut être robotisée.
   - la deuxième nappe de tissu enduit ne reçoit pas d'anticollant.
- étape 2
   - on solidarise en continu la première nappe sur la deuxième nappe.
   - pour les tissus enduits de caoutchouc, simultanément et en continu, on vulcanise d'une part les deux nappes et on les solidarise d'autre part dans les zones n'ayant pas d'anticollant, par pression et chauffage.
   - pour les tissus enduits de plastique, en continu on solidarise les deux nappes dans les zones n'ayant pas d'anticollant, par pression et chauffage.

Selon d'autres caractéristiques de l'invention :
Les étapes de dépôt de l'agent anticollant (14) et d'assemblage peuvent être effectuées simultanément. Ces étapes peuvent tout particulièrement être effectuées sans arrêt entre les étapes de dépôt d'agent anticollant et d'assemblage, et/ou sans qu'une autre étape vienne s'intercaler entre les étapes de dépôt d'agent anticollant et d'assemblage, autrement dit directement l'une à la suite de l'autre.

Le tissu de chaque nappe peut être revêtu d'enduit sur une face ou sur les deux faces.

L'enduit peut comprendre ou être constitué d'au moins une couche de caoutchouc ou d'au moins une couche de plastique

L'agent anticollant peut être constitué par un produit incompatible avec l'enduit des nappes et supportant la pression comme, par exemple, un film infusible, une poudre, une dispersion ou une solution d'anticollant.

Ce procédé de fabrication n'est pas limité à deux nappes de tissu enduit, il est possible d'assembler N nappes.

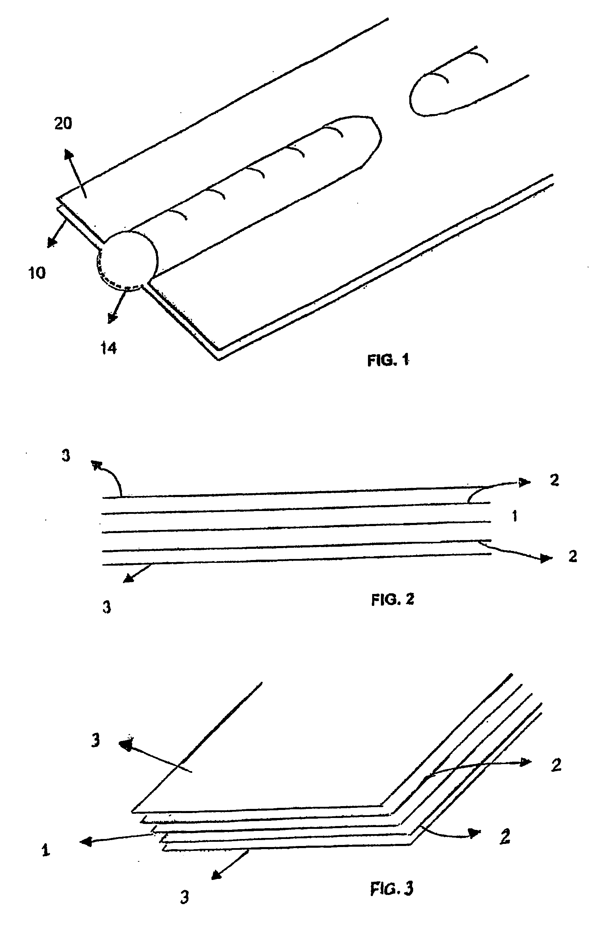

Dans ce cas, l'assemblage peut se faire avec N-1 nappes de tissu enduit ayant de l'agent anticollant (14) (figure n°1) et 1 nappe sans agent anticollant.

La figure n°1 est une vue schématique en perspective du complexe comportant deux nappes de tissu enduit (10) et (20) et un anticollant (14) pour former des poches étanches.

La description, qui va suivre, du procédé de fabrication est un exemple donné à titre indicatif.

Dans une phase préparatoire, l'on réalise les nappes de tissu enduit de caoutchouc (10) et (20).

Les différentes étapes de cette réalisation sont schématisées sur la figure 2 (vue en coupe) et la figure 3 (vue en perspective) sont les suivantes :
* dépôt en continu sur le tissu (1), figures 2 et 3, d'un adhésif (2), celui-ci étant une dispersion ou une dissolution d'un polymère.

L'adhésif peut être disposé sur une seule face du tissu ou sur les deux faces.

Cet adhésif est disposé en vue de permettre d'obtenir une bonne adhérence entre les éléments (1) et (3). Il est réalisé sur un métier à enduire et la colle est formulée de façon à avoir de bonnes adhérences entre le tissu (1) et l'enduit (3).
* séchage de cette dispersion ou dissolution
* dépôt en continu par calandrage sur l'adhérisation d'au moins une couche d'un enduit (3) figure 2 qui est un mélange de caoutchouc formulé pour rendre étanche les poches et répondre aux caractéristiques d'usage de l'engin.

Avec les nappes de tissus enduits ainsi réalisées dans la première étape, on pose l'anticollant (14) sur la première nappe de tissu enduit (10) à l'endroit correspondant aux poches. Cet agent anticollant peut comprendre, ou être constitué, soit par un film infusible, soit par une poudre comme du talc ou de la bentone, soit par une dispersion ou une dissolution d'anticollant.

Dans la deuxième étape de solidarisation la nappe de tissu enduit (10) ayant reçu l'anticollant (14) est assemblée à la nappe (20) sans anticollant par chauffage et/ou pression. Le chauffage permet au caoutchouc de se vulcaniser, la pression donne la cohésion et l'adhérence d'une part entre les tissus (1) et (2) et l'enduit (3) et d'autre part entre les nappes de tissus enduits (10) et (20) aux endroits où il n'y a pas d'anticollant.

Cette opération peut se faire en continu, sur la machine comportant un cylindre chauffé et un tablier sans fin, muni de vérins, pour assurer la pression ou encore par passage entre deux cylindres dont un ou les deux peuvent être recouverts de polymère pour assurer une pression uniforme.

Tout particulièrement, les deux étapes décrites ci-dessus sont réalisées simultanément.

Le procédé peut comprendre en outre une étape permettant au complexe souple de présenter un système (A) permettant le remplissage, notamment le gonflage, de toutes les poches (6) en une seule fois et/ou en un seul point.

Ce système (A) peut correspondre à des passages (4) connectant les poches (6) les unes à la suite des autres, permettant ainsi de les remplir en une seule fois et/ou en un seul point.

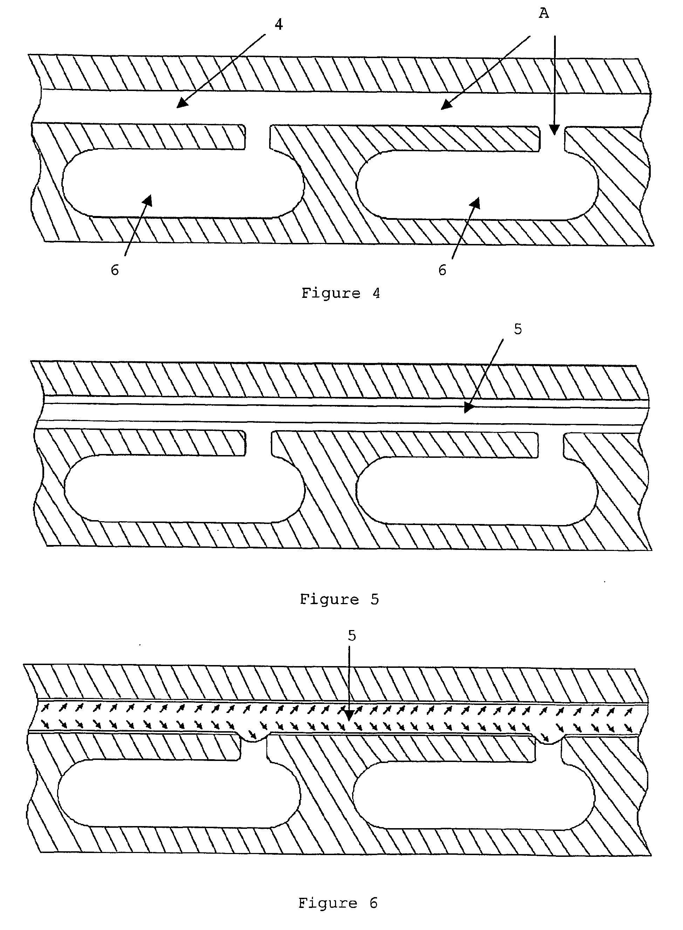

La figure 4 représente un mode de réalisation d'un complexe souple comprenant un système (A).

Cette étape d'installation du système (A) peut notamment être réalisée par une étape du procédé dans laquelle le dépôt d'un anticollant est également effectué aux endroits destinés à former les passages (4) entre les poches (6), notamment où l'on souhaite que les poches communiquent.

Selon une variante, la pose de l'anticollant destiné à permettre la formation du système (A) peut être concomitante avec la pose de l'agent anticollant destiné à permettre la formation des poches.

Cependant un complexe souple dans lequel les poches sont reliées entre elles, peut présenter l'inconvénient qu'en cas de fuite, toutes les poches peuvent se vider.

De manière à remédier en tout ou partie à ce problème, les inventeurs ont découvert un système permettant de limiter le volume pouvant s'échapper en cas de fuite, notamment du type percement de la paroi d'une poche.

Le procédé peut ainsi comprendre une étape permettant d'obtenir un complexe souple dans lequel il est possible d'obturer les passages (4) existant entre les poches, notamment lorsque celles-ci sont remplies, par exemple par un gaz, un liquide ou un solide.

Ceci peut notamment être réalisé par une étape consistant à déposer, avant ou pendant l'assemblage des nappes, un obturateur (5) au niveau des endroits destinés à former les passages (4) entre les poches, autrement dit au niveau du système (A), ou encore au niveau de la zone de distribution destinée à former un passage entre les poches.

Ledit obturateur (5), notamment gonflable, peut consister en un tube (5) présentant un diamètre ajustable, notamment élastique, présentant au repos un diamètre inférieur à la taille des passages entre les poches de manière à ce que l'on puisse remplir les poches en une seule fois et/ou en un seul point.

La figure 5 représente un mode de réalisation de complexe souple comprenant un obturateur (5), dans lequel celui-ci est un tube élastique gonflable.

Ledit obturateur (5) peut permettre d'obturer les passages (4) entre les poches (6) en une seule opération, par exemple par son remplissage.

Une fois les poches (6) remplies, le diamètre du tube (5) peut être augmenté de manière à venir se plaquer sur les parois des passages (4) entre les poches, et les obturer. L'augmentation du diamètre du tube (5) peut être due à son remplissage, notamment par de l'air. Dans ce cas, le tube (5) peut être réalisé dans un matériau plastique ou élastomérique présentant un grand pouvoir retour élastique et un faible module.

La figure 6 représente un mode de réalisation d'obturation.

Selon un mode de réalisation particulier, le procédé comprend les étapes consistant à :
- déposer sur un tissu enduit de l'anticollant (14) à l'endroit destiné à former les poches (6) et les passages (4) permettant de gonfler les différentes poches,
- déposer au niveau de la surface définie par l'anticollant un tube (5) permettant d'obturer les passages (4) entre les poches (6), notamment une fois celles-ci remplies,
- assembler en continu la nappe de tissu enduit (10) sur laquelle l'agent anticollant (14) a été déposée avec la nappe de tissu enduit (20), par chauffage et/ou pression.

Le procédé décrit ci-dessus peut tout particulièrement permettre de produire des complexes souples comprenant plusieurs poches parallèles et/ou à la suites les unes par rapport aux autres.

Selon un autre de ses aspects, l'invention a pour objet un complexe souple comprenant au moins une poche (6) étanche, la surface interne de ladite poche étant recouverte en tout ou en partie, et notamment sur une de ses faces, d'un agent anticollant.

Les poches étanches peuvent :
- chacune comprendre une valve permettant le remplissage de chaque poche, ceci implique un gonflage discontinu, poche par poche,
- être reliées entre elles, de manière à ce que toutes les poches puissent être gonflées en une fois, il s'agit alors d'un gonflage continu.

Plus précisément les passages (4) entre les poches (6) comprennent un obturateur (5), notamment gonflable, par exemple de type vessie ou tube, notamment élastique, permettant d'obturer lesdits passages.

Les complexes souples décrits dans le présent brevet peuvent être :
- des barrages souples gonflables, notamment utiles dans la lutte contre la pollution aquatique,
- des coffrages béton, notamment pour des applications maritimes,
- des radeaux ou embarcations gonflables,
- des structures gonflables, par exemple tente de déploiement rapide, douche de décontamination, ou
- des digues gonflées ou lestées, notamment pour la lutte contre les inondations.

## Revendications

1. Procédé de fabrication en continu d'un complexe souple comprenant, ou constitué par, au moins une poche étanche comprenant les étapes consistant à :
- déposer sur au moins une nappe de tissu enduit de caoutchouc (10) un agent anticollant (14) dans les zones destinées à former la ou les poches,
- assembler en continu la nappe de tissu enduit (10) sur laquelle l'agent anticollant a été déposé avec la nappe de tissu enduit (20), par chauffage et/ou pression, dans lequel l'étape d'assemblage est effectuée à une vitesse de défilement du tissu supérieure ou égale à 8 m/h.

2. Procédé selon la revendication 1 dans lequel les étapes de dépôt de l'agent anticollant (14) et d'assemblage sont effectuées simultanément.

3. Procédé selon l'une quelconque des revendications 1 à 2, ledit procédé comprenant en outre une étape consistant à déposer de l'agent anticollant aux endroits destiné à former les passages entre les poches.

4. Procédé selon la revendication 3, ledit procédé comprenant en outre une étape consistant à déposer, avant l'assemblage des nappes, un tube (5) au niveau des endroits destiné à former les passages entre les poches.

5. Procédé de fabrication selon l'une quelconque des revendications 1 à 4 dans lequel le chauffage et la pression des nappes de tissu enduit de caoutchouc permettent de vulcaniser le caoutchouc et donne cohésion et adhérence entre le tissu et l'enduit 3.

6. Procédé de fabrication selon l'une quelconque des revendications 1 à 5 dans lequel l'agent anticollant est constitué d'un produit incompatible avec l'enduit (3) des nappes 10-20 comme, par exemple, un film infusible, une poudre ou une dispersion ou une solution d'anticollant.

7. Procédé de fabrication selon l'une quelconque des revendications 1 à 6 dans lequel on assemble N nappes avec N-1 nappes ayant un agent anticollant 14 et une nappe sans anticollant.

8. Complexe souple en caoutchouc comprenant au moins une poche étanche (6), la surface interne de ladite poche étant recouverte en partie, et sur une de ses faces, d'un agent anticollant, dans lequel les passages (4) entre les poches comprennent un obturateur (5).

9. Complexe souple selon la revendication 8, dans lequel les poches étanches sont reliées entre elles par des passages 4, de manière à ce que toutes les poches puissent être gonflées en une fois et/ou en un seul point.

10. Complexe souple selon la revendication 9, dans lequel l'obturateur est gonflable et permet d'obturer lesdits passages.

11. Complexe souple selon la revendication 10 dans lequel l'obturateur est choisi parmi une vessie ou un tube

## Claims

1. A process for continuous manufacture of a flexible complex comprising, or constituted by, at least one tight pocket comprising the steps consisting of:
- depositing an anti-adhesive agent (14) on at least one sheet of coated fabric with rubber (10) in zones for forming the pocket or pockets, and
- continuously assembling the sheet of coated fabric (10) on which the anti-adhesive agent was deposited with the sheet of coated fabric (20) by heating and/or pressure
wherein the assembly is carried out at a moving speed of the fabric that is greater than or equal to 8 m/h.

2. The process according to claim 1, wherein the steps of depositing the anti-adhesive agent (14) and assembly are carried out simultaneously.

3. The process according any of claims 1 to 2, further comprising depositing anti-adhesive agent at locations intended to form passages between the pockets.

4. The process according to claim 3, further comprising depositing, before assembly of the sheets, a tube (5) at locations intended to form passages between the pockets.

5. The process according to any of claims 1 to 4, wherein the heating and the pressure of the sheets of fabric coated with rubber cause the rubber to be vulcanized and impart cohesion and adherence between the fabric and the coating 3

6. The process according to any of claims 1 to 5, wherein the anti-adhesive agent is constituted by a product incompatible with the coating 3 of the sheets 10-20 as, for example, an infusible film, a powder or a dispersion or an anti-adhesive solution.

7. The process according to any of claims 1 to 6, wherein N sheets are assembled with N-1 sheets having an anti-adhesive agent 14 and a sheet without anti-adhesive.

8. A flexible complex comprising at least one tight pocket (6), the inner surface of which pocket being covered on one of its faces by an anti-adhesive agent. wherein passages (4) between the pockets comprise an obturator (5).

9. The flexible complex according to claim 8, wherein the tight pockets are connected to each other by passages 4 in such a manner that all pockets can be inflated at the same time and/or at a single point.

10. The flexible complex according to claim 9, wherein the obturator is inflatable and allows to obdurate said passages.

11. The flexible complex according to claim 10, wherein the obturator is an elastic bladder or tube that permits passages to be obturated.

## Patentansprüche

1. Verfahren zur ununterbrochenen Herstellung eines flexiblen Komplexes umfassend oder bestehend aus mindestens einer dichten Tasche, welches die folgenden Schritte umfasst:
- Auftragen eines Klebrigkeitsverminderers (14) auf mindestens eine mit Kautschuk beschichtete Gewebelage (10) in den Bereichen, die dazu bestimmt sind, die Tasche(n) zu bilden,
- Ununterbrochenes Verbinden durch Hitze und/oder Druck der beschichteten Gewebelage (10), auf welcher der Klebrigkeitsverminderer aufgetragen worden ist, mit der Lage des beschichteten Gewebes (20), wobei der Verbindungsschritt bei einer Stoffdurchlaufgeschwindigkeit von größer gleich 8 m/Std. durchgeführt wird.

2. Verfahren nach Anspruch 1, wobei die Schritte des Auftragens des Klebrigkeitsverminderers (14) und des Verbindens gleichzeitig durchgeführt werden.

3. Verfahren nach Anspruch 1 oder Anspruch 2, wobei das Verfahren ferner einen Schritt umfasst, der daraus besteht, den Klebrigkeitsverminderer an den Stellen aufzutragen, die dazu bestimmt sind, die Passagen zwischen den Taschen zu bilden.

4. Verfahren nach Anspruch 3, wobei besagtes Verfahren ferner einen Schritt umfasst, der daraus besteht, vor dem Verbinden der Lagen, ein Rohr (5) an den Stellen aufzulegen, die dazu bestimmt sind, die Passagen zwischen den Taschen zu bilden.

5. Herstellungsverfahren nach einem beliebigen der Ansprüche 1 bis 4, wobei das Erhitzen und das Pressen der mit Kautschuk beschichteten Gewebelagen die Vulkanisierung des Kautschuks ermöglicht und die Kohäsion und Haftung zwischen Gewebe und Beschichtung (3) schafft.

6. Herstellungsverfahren nach einem beliebigen der Ansprüche 1 bis 5, wobei der Klebrigkeitsverminderer aus einem mit der Beschichtung (3) der Lagen 10-20 unverträglichen Produkt besteht, wie zum Beispiel einem nicht schmelzenden Film, einem Pulver oder einer Dispersion oder einer Lösung des Klebrigkeitsverminderers.

7. Herstellungsverfahren nach einem beliebigen der Ansprüche 1 bis 6, wobei N Lagen mit N-1 Lagen verbunden werden, die einen Klebrigkeitsverminderer 14 und eine Lage ohne Klebrigkeitsverminderer haben.

8. Flexibler Komplex aus Kautschuk mindestens eine dichte Tasche (6) umfassend, wobei die Innenoberfläche der besagten Tasche teilweise und auf einer ihrer Seiten mit einem Klebrigkeitsverminderer bedeckt ist, in dem die Passagen (4) zwischen den Taschen einen Verschluss (5) umfassen.

9. Flexibler Komplex nach Anspruch 8, in welchem die dichten Taschen miteinander durch Passagen (4) verbunden sind, so dass alle Taschen in einem Arbeitsgang und/oder an einem einzigen Punkt aufgeblasen werden können.

10. Flexibler Komplex nach Anspruch 9, in dem der Verschluss aufblasbar ist und den Verschluss besagter Passagen ermöglicht.

11. Flexibler Komplex nach Anspruch 10, in dem der Verschluss unter einer Blase oder einem Rohr gewählt wird.
